# EUROPÄISCHE PATENTSCHRIFT

(11) **EP 2 704 957 B1**
(45) Veröffentlichungstag und Bekanntmachung des Hinweises auf die Patenterteilung: **08.08.2018**
(21) Anmeldenummer: 12715000.1
(22) Anmeldetag: 02.04.2012
(51) Int. Cl.: C09J 7/29, B65D 5/70

(54) **VERWENDUNG EINES KLEBEBANDSYSTEMS ALS AUFREISSSTREIFEN AUF EINEM KARTON**
USE OF AN ADHESIVE-TAPE SYSTEM AS TEAR-OPEN STRIP ON A CARDBOARD BOX
UTILISATION D'UN SYSTÈME DE BANDE ADHÉSIVE EN TANT QUE BANDE DÉCHIRABLE SUR UN CARTON

(30) Priorität: 05.05.2011 DE 102011075313
(43) Veröffentlichungstag der Anmeldung: 12.03.2014
(73) Patentinhaber: tesa SE, 22848 Norderstedt (DE)
(72) Erfinder: KRAUSE, Christian, 21224 Rosengarten (DE); OTTEN, Ulrich, 22579 Hamburg (DE); URBAN, Tanja, 22159 Hamburg (DE); KEREP, Patrick, 22767 Hamburg (DE)
(86) Internationale Anmeldenummer: PCT/EP2012/055978
(87) Internationale Veröffentlichungsnummer: WO 2012/150099

(56) Entgegenhaltungen:
- EP-A2- 2 189 506
- WO-A1-2009/092641

## Beschreibung

Die Erfindung betrifft die Verwendung eines Klebebandsystems als Aufreißstreifen auf einem Karton.

Aufreißstreifen sind bekannt und dienen in verschiedenen Formen als Öffnungshilfe einerseits für Zigarettenpackungen, Süßwarenverpackungen und ähnlichen Verpackungen, die mit einer Folie eingeschlagen sind, andererseits für Kartonagen wie etwa Waschmittelverpackungen. Dabei wird der Aufreißstreifen an der Verpackung so befestigt, dass man zum Öffnen an dem Aufreißstreifen zieht und damit die Einschlagfolie beziehungsweise den Karton an der gewünschten Stelle auftrennt.

Traditionell sind Aufreißstreifen im Einsatz, die einseitig mit einer Klebemasse auf Hotmeltbasis ausgerüstet sind. Beispielsweise werden diese in der US 3,187,982 A, der US 3,311,032 A oder der CA 749 198 A beschrieben.

Weiterhin wird ein Aufreißstreifen verwendet, der selbstklebend ausgerüstet ist. Dazu bedient man sich einer monoaxial gereckten Trägerfolie, die mit einer selbstklebenden Schicht auf der einen Seite und einer Silikonreleaseschicht auf der anderen Seite ausgestattet ist. Optional ist unter einer der beiden Schichten ein Druck. Solche oder ähnliche Aufbauten sind für die Herstellung von Haftklebebändern bekannt, beispielsweise aus der DE 21 04 817 A, der US 3,088,848 A, der US 3,482,683 A oder der US 2,956,904 A. Nicht offenbart wird in diesen Schriften die Verwendung solcher Folienaufbauten für selbstklebende Aufreißstreifen. Die Verwendung von selbstklebenden Bändern dieser Art als Aufreißstreifen wird aber in der Zeitschrift "Packaging Review" vom Februar 1973, Seite 57 erwähnt.

Eine spezielle Ausführungsform dieser selbstklebend ausgerüsteten Aufreißstreifen beschreibt die DE 43 38 524 A1. In dieser wird ein selbstklebender Aufreißstreifen offenbart bestehend aus einer Trägerfolie, einer Releaseschicht, einer der Releaseschicht abgewandten Kleberschicht und gegebenenfalls einem Druck unter der Kleber- oder Releaseschicht. Der Streifen ist dadurch gekennzeichnet, dass die Trägerfolie aus einer verstreckten Folie besteht, dass die Release- und Kleberschicht aus wässriger Lösung, Emulsion oder Dispersion aufgetragen werden und dass Releaseschicht, Druckfarbe und Kleberschicht auf einer gegenüber dem Aufreißstreifen um ein vielfaches breitere Folie in einem Arbeitsgang auf einer Maschine aufgetragen werden.

Üblich für den Einsatz als Öffnungshilfe von Folienverpackungen sind mindestens monoaxial, bevorzugt biaxial verstreckte mindestens einschichtige 15 bis 60 µm dicke Trägerfolien.

Selbstklebende oder wärmeaktivierbare Aufreißstreifen aus in Längsrichtung verstreckter Polypropylen-Folie werden für das Aufreißen von Kartonagen seit langem eingesetzt. Sie werden angeboten in Folienstärken von 50 bis 140 µm. Foliendicken größer 85 µm finden Verwendung beim Öffnen besonders schwerer Kartonagen. Üblicher sind Aufreißstreifen in Dicken zwischen 60 und 90 µm.

Aufreißstreifen, die auf einem monoaxial gerecktem Polypropylenträger basieren, verwenden häufig für den Träger eine spezielle, in ihrer Aufreißleistung optimierten Polymerabmischung, die in Zugfestigkeiten in Längsrichtung von 230 bis 330 N/mm² resultiert.

Diese Polypropylen-Aufreißstreifen in vorzugsweise 60 bis 65 µm zeigen ein einwandfreies Aufreißverhalten bei sämtlichen Wellpapp-Kartonagen einschließlich der Mikrowellpappe. Dies gilt unabhängig davon, ob genau in Richtung des aufgeklebten Streifens aufgerissen wird.

"Genau in Richtung des aufgeklebten Streifens" bedeutet, dass der Aufreißstreifen beim Aufreißvorgang so geführt wird, dass die Zugrichtung nie von der Richtung abweicht, die der auf der Kartonrückseite verklebte Aufreißstreifen vorgibt und die während des Aufreißvorganges als Aufreißfuge auch von der Kartonvorderseite aus sichtbar wird. Nur dann ist die Kräfteverteilung im Aufreißstreifen bei dem Aufreißvorgang symmetrisch und die Belastung beider Schnittkanten gleichmäßig. In der Praxis wird diese ideale Aufreißrichtung meist nicht eingehalten. Es ist mit Abweichungen von dieser Richtung bis zu etwa 30° zu rechnen.

Ein Trend im Aufreißstreifenmarkt ist das Abweichen von der auf die Aufreißleistung optimierten Folienrezeptur. Eine verminderte Aufreißleistung wird hierbei billigend in Kauf genommen, um im Gegenzug eine verbesserte Maschinengängigkeit des Aufreißstreifens während seiner Applikation zu erzielen.

Beispielsweise kann eine Reduzierung der Schlagzähzusätze unter die für eine optimale Aufreißleistung empfehlenswerte Menge bis hin ihrem völligen Weglassen vorgenommen werden.

Schwere Vollpapp-Qualitäten mit etwa 1000 g/m² lassen sich nur noch in der optimalen Aufreißrichtung störungsfrei aufreißen. Bei Abweichen von dieser Richtung können infolge der unsymmetrischen Belastung des Streifens von der stärker belasteten Kante des Streifens ausgehende Abrisse beim Aufreißvorgang auftreten. Die Häufigkeit der Abrisse wird zum Beispiel von Inhomogenitäten in der Folie, von Mikroscharten in den Schnittkanten der Folienstreifen, von Holzteilchen oder besonders verfestigten Partikeln in der Pappe und ähnlichen Erscheinungen beeinflusst. Außerdem besitzt die Aufreißgeschwindigkeit einen Einfluss.

Für die Verpackung von Waschmitteln werden in stärkerem Masse Vollpappen zwischen 450 und 600 g/m² Flächengewicht eingesetzt, die unter Umständen eine wachsimprägnierte Zwischenschicht aufweisen, auf jeden Fall aber mit einer auflaminierten Deckschicht aus hochglänzendem gussgestrichenem Chromolux-Papieren versehen sind. Diese Pappen lassen sich mit den Polypropylen-Aufreißstreifen nur mit einem ähnlich schlechten Ergebnis aufreißen wie die oben genannten 1000 g/m²-Vollpappen.

Die EP 2 189 506 A2 offenbart die Verwendung eines Streifen eines Klebebands zur Verstärkung von Kartonagen insbesondere im Bereich von Stanzungen und gleichzeitig als Aufreißstreifen für diese Kartonagen, wobei als Trägermaterial für das Klebeband eine monoaxial in Längsrichtung des Streifens verstreckte Polyolefinfolie verwendet wird und wobei die Folie eine Mischung aus einem olefinischen und einem polaren nichtolefinischen Polymer enthält.

Nicht beschrieben ist die Verwendung eines aus zwei Klebebändern bestehenden Klebebandsystems, bei dem zwischen den Klebebändern ein Karton angeordnet ist.

Aus der EP 0 269 967 A1 ist ein Aufreißstreifen mit einem in überwiegend einer Richtung gerecktem Träger bekannt, der mit einer Klebeschicht versehen ist, wobei der Träger aus mindestens einer Basisschicht besteht, die mit mindestens einer zähen Schicht versehen ist, die zäher ist als die Basisschicht.

Besonders bevorzugt wird ein Aufreißstreifen mit einem in überwiegend einer Richtung gereckten Träger, der mit einer Klebeschicht versehen ist, wobei der Träger aus mindestens einer ein Polypropylen-Olefin-Copolymerisat und/oder ein Polypropylen-Schlagzähzusatz-Gemisch enthaltenden Basisschicht besteht, die mit mindestens einer polypropylenhaltigen zähen Schicht versehen ist, die einen Schlagzähzusatz enthält und zäher ist als die Basisschicht ist.

Bei Aufreißstreifen auf Polypropylen-Basis kommt bevorzugt TPP (entspricht monoaxial gestrecktem Polypropylen (MOPP)) zur Verwendung, da auch unter hoher Zugbelastung nur eine geringe Dehnung auftreten darf.

Hohe Zugbelastungen treten einmal bei der Endanwendung auf, wenn der Aufreißstreifen beim Öffnen der Verpackung durch die Pappe oder den Karton beziehungsweise die Folie gezogen wird und diese sicher zertrennen soll. Sie treten des Weiteren auch bei der Applikation des Aufreißstreifens auf die Verpackung auf, da dieser häufig mit Geschwindigkeiten von mehr als 150 m/min aufgebracht wird. Insbesondere beim Start, das heißt dem Auflegen des Aufreißstreifens auf zum Beispiel die Pappe, wird die bis zu ca. 15 kg schwere Spule, zu welcher der Aufreißstreifen handelsüblich konfektioniert ist, plötzlich und ruckartig beschleunigt. Selbst im Dauerbetrieb wirken auf den Aufreißstreifen oftmals Zugbeanspruchungen von mehr als 8 N. Dies schließt den Einsatz von ungerecktem oder auch biaxial gerecktem Polypropylen aus.

Wenn TPP ohne Release verwendet wird, tritt beim Abrollen, also beim Trennen von Masse und Träger, ein Spleißen des Trägers auf, sprich ein Teil der in Längsrichtung ausgerichteten und gereckten Fasern wird aus der Trägeroberfläche herausgerissen. Dies kann den Prozess der Konfektionierung beeinträchtigen, wenn die beschichtete und gegenüber dem Aufreißstreifen viel breitere Folienbahn in einzelne Aufreißstreifen geschnitten und hierfür vom Ballen abgerollt wird. Die aus der Trägeroberfläche stehenden Fasern selbst behindern den Prozess, oder es kann auch zu Abrissen der gesamten Trägerbahn kommen. Weiterhin können ähnliche Probleme beim Abrollen des Aufreißstreifens während der Applikation auf die Verpackung auftreten.

Aktuell erfüllen Verkaufstrays, die zur Aufnahme von in einzelnen Kartons verpackten Produkten dienen, zwei Aufgaben. Zum einen werden die Kartons in einem oben offenen Tray angeordnet. Dieses Tray wird im Verkaufsladen optisch ansprechend dem Kunden dargeboten, der aus dem Tray einzelne Kartons entnehmen kann. Durch das Tray erreicht man, dass die Kartons gebündelt und stets in einer geordneten Aufstellung verbleiben.

Zum anderen sollen die Trays die in dem Tray befindlichen Kartons auf dem Weg vom Produzenten oder Abfüller bis zum Verkaufsladen schützen. Hierzu wird das Produkt vollständig mit einer Pappverpackung umgeben, die zur Darbietung des Inhalts unter Verwendung eines Aufreißstreifens aufgerissen wird. Der obere Teil des Kartons wird entfernt, der untere Teil dient als Verkaufstray.

Um einen optisch ansprechenden Eindruck hervorzurufen, ist es erforderlich, dass die Aufreißlinie einen sauberen und glatten Kantenabschluss aufweist. Die Pappe des Kartons sollte nicht ausfranzen, des Weiteren muss der Riss möglichst präzise geradeaus verlaufen. Der Fachmann spricht in diesem Zusammenhang von einem "Clean Cut".

Zum Öffnen von Kartonagen, so dass ein Clean Cut entsteht, existieren hauptsächlich zwei Lösungen.

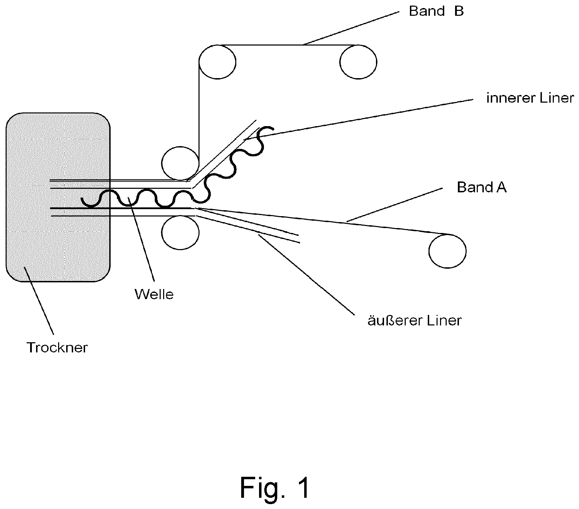

Das so genannte Adalissystem (von der Firma Adalis entwickelt) besteht aus zwei Klebebändern (Führungsklebeband = Band A und Aufreißstreifen = Band B), die wie in Figur 1 gezeigt, im Karton installiert sind. Der Karton setzt sich aus einem inneren Liner und einem äußeren Liner zusammen, wobei zwischen den Linern wie üblich eine Welle aus Pappe angeordnet ist.

Die Klebebänder bestehen aus einem Trägermaterial aus zahlreichen Polyesterfilamenten, die mit einem Klebstoff zusammengehalten werden. Das Trägermaterial ist mit einem Schmelzklebstoff beschichtet. Die beiden Liner sowie die Welle und die beiden Klebebänder laufen dabei durch einen Heizkanal, so dass entsprechend der Figur 1 ein Laminat entsteht.

Nachteil dieses Systems ist, dass die eingesetzten Klebebänder sehr dick sind (2 x 170 µm) und sich dadurch das Druckbild auf dem äußeren sichtbaren Liner durch Abnutzung der erhabenen Stellen beim Transport und der Lagerung verschlechtert. Zudem werden im Rahmen einer Fertigung viele dieser nicht aufgefalteten Kartons (Kartonzuschnitte) und gefalteten Boxen gestapelt. Da die Klebebänder immer an der selben Stelle auf dem Kartonzuschnitt aufgebracht sind, führt das im Stapel zum Aufbau an Dicke an diesem Punkt. Dadurch wird der Stapel schief, und die Bögen fangen ab einem bestimmten Neigungsgrad an zu rutschen, die resultierenden Stapel sind instabil. Weiterhin ist bedingt durch die hohe Dicke die Zahl an Laufmeter Klebeband bei gleicher Breite und gleichen Spulenabmessungen auf einer Klebebandspule deutlich geringer als bei dünneren Tapes. Für die Wellpackindustrie ist es aber häufig notwendig, größere Produktionskampagnen zu fahren, was bedeutet, dass die Anlage zum Wechsel der Spulen entweder angehalten oder ein Splice bei laufender Anlage gemacht werden muss, was immer mit einer hohen Gefahr eines Risses verbunden ist.

Des Weiteren kann es beim Bedrucken solcher Kartons zu Problemen kommen, weil durch die unterschiedlichen Dicken des Drucksubstrats im Druckprozess unterschiedliche Druckverhältnisse entstehen, was in einem ungleichmäßigen Druckbild resultieren kann. Demnach ist es also für den Verarbeiter von Wellpackbögen mit Aufreißstreifen von Interesse, vor allen Dingen dünne Klebebänder zu nutzen, um solche Probleme nicht entstehen zu lassen.

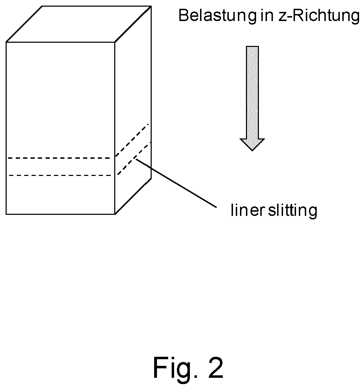

Eine Variante besteht darin, den mit dem Aufreißstreifen versehenen Karton im Bereich oberhalb der Außenkanten des Aufreißstreifens anzuritzen, also zu schwächen (so genanntes "Liner Slitting"). Dies zeigt die Figur 2. Für diesen Fall kann auf ein Aufreißstreifen zurückgegriffen werden, der beispielsweise nur eine Dicke von 90 µm aufweist, was die oben geschilderten Probleme weitgehend vermeidet.

Der äußere Liner ist entlang der gewünschten Risskante vorher oberflächlich angeritzt, so dass er beim Öffnen eine saubere Risskante hinterlässt und sich nach dem Öffnen ein optisch ansprechendes Display ergibt. Nachteil dieser Lösung ist, dass die Verletzung des äußeren Liners zu Verlusten an Stabilität in z-Richtung des Kartons führt. Der Karton gibt bevorzugt an der verletzten Stelle nach. Gemessen wird dieses Phänomen mit dem sogenannten "box compression test".

Diese Lösung hat somit zur Folge, dass die Stapelfähigkeit der aufgefalteten Kartons reduziert ist.

Aufgabe der Erfindung ist es, gegenüber dem Stand der Technik eine merkliche Verbesserung zu erzielen und eine Lösung zur Verfügung zu stellen, mit der ein Karton aufgerissen werden kann, wobei sich saubere Risskanten im Karton ergeben und wobei die Lösung den Karton möglichst geringfügig verdicken soll.

Gelöst wird diese Aufgabe durch die Verwendung eines Klebebandsystems als Aufreißstreifen auf einem Karton , wie sie im Hauptanspruch näher gekennzeichnet ist. In den Unteransprüchen sind vorteilhafte Ausführungsformen der Erfindung beschrieben. Des Weiteren ist ein mit dem Klebebandsystem ausgerüsteter Karton vom Erfindungsgedanken umfasst.

Demgemäß betrifft die Erfindung die Verwendung eines Klebebandsystems als Aufreißstreifen auf einem Karton, der aus einem äußeren Liner und einem inneren Liner besteht, wobei zwischen den Linern zumindest eine Welle aus Pappe angeordnet ist, , bestehend aus einem zumindest einseitig mit einer Klebebeschichtung ausgerüsteten Klebeband A mit einem Folienträger, wobei die Folie eine monoaxial in Längsrichtung des Streifens verstreckte Polyolefinfolie ist und die Folie eine Mischung aus einem olefinischen und einem polaren nichtolefinischen Polymer enthält, und einem zumindest einseitig mit einer Klebebeschichtung ausgerüsteten Klebeband B mit einem Folienträger, wobei die Klebebänder A und B übereinander angeordnet sind und wobei das Klebeband A auf der Innenseite des äußeren Liners und das Klebeband B auf der Außenseite des inneren Liners aufgebracht sind, so dass das Klebeband B unterhalb des Klebebands A angeordnet ist.

Es liegt innerhalb des Erfindungsgedankens, wenn die Folienträger der Klebebänder A und B identisch sind oder zumindest beide die beschriebene Mischung aus einem olefinischen und einem polaren nichtolefinischen Polymer enthalten. Bevorzugt ist also eine Ausführungsform, in der der Folienträger des Klebebands A und der Folienträger des Klebebands B eine monoaxial in Längsrichtung des Streifens verstreckte Polyolefinfolie ist und die Folie eine Mischung aus einem olefinischen und einem polaren nichtolefinischen Polymer enthält, wobei weiter vorzugsweise die beiden Folienträger identisch sein können. Bei dieser Ausführungsform ist darüber hinaus bevorzugt, wenn die beiden Klebebänder die identische Breite aufweisen.

Im Folgenden wird zunächst der Folienträger des Klebebands A näher beschrieben.

In der Folie des Klebebands A liegt der Anteil an polarem nichtolefinischem Polymer in der Mischung vorzugsweise im Bereich von 5 bis 50 Gew.-%, vorzugsweise 20 bis 30 Gew.-%.

Zur Erzielung von hohen Zugfestigkeiten, von hohen Spannungen bei 10 %-Dehnung und von hohem Weiterreißwiderstand sollten die Reckprozessbedingungen so gewählt werden, dass das Reckverhältnis das für Folie jeweils maximal technisch durchführbare ist. Erfindungsgemäß liegt das Reckverhältnis in Längsrichtung vorzugsweise bei mindestens 1:4,5, weiter vorzugsweise bei mindestens 1:6.

Ein Reckverhältnis von zum Beispiel 1:6 gibt an, dass aus einem Abschnitt der Primärfolie von 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet. Hier wird die erste Definition verwendet.

In einer bevorzugten Ausführung der Erfindung weist die Folie die folgenden Eigenschaften auf:
- in Längsrichtung eine Zugfestigkeit von 200 N/mm² bis 300 N/mm², vorzugsweise 220 N/mm² bis 260 N/mm², weiter vorzugsweise 240 N/mm² und/oder
- in Längsrichtung eine Spannung bei 10 %-Dehnung von mindestens 80 N/mm², vorzugsweise mindestens 130 N/mm², weiter vorzugsweise mindestens 150 N/mm².

Zur Berechnung von Festigkeitswerten werden die breitenbezogenen Kraftwerte durch die Dicke geteilt. Im Fall einer Bestimmung der Festigkeitswerte am Klebeband wird als Dicke nicht die Gesamtdicke des Klebebands A, sondern nur die der Trägerfolie zugrunde gelegt.

Wie Versuche mit dem Fachmann bekannten Versuchsaufbauten der Firma Zwick zeigen, ist ein Durchreißen der Folie in Querrichtung praktisch nicht möglich. Bei der zu untersuchenden Probe der Folie wird durch einen Einschnitt in Querrichtung die Kante verletzt. Wird nun Zug ausgeübt, setzt sich der Riss nicht in Querrichtung fort, sondern wird in die Längs- oder Maschinenrichtung umgelenkt.

Die Dicke der Trägerfolie liegt vorzugsweise zwischen 15 und 200 µm, besonders bevorzugt zwischen 30 und 140 µm, ganz besonders bevorzugt zwischen 50 und 100 µm.

Eine Dicke bis zu 200 µm kann dann gewählt werden, wenn die durch das Klebeband hervorgerufenen Dickenabweichungen der aufeinander zu stapelnden Kartonzuschnitte oder Kartons von untergeordneter Wichtigkeit ist. Bevorzugt werden Dicken von maximal 140 µm.

Das olefinische Polymer ist ein Homo- oder Copolymer von Olefinen wie Ethylen, Propylen oder Butylen. Der Begriff Copolymer in hier sinngemäß dahingehend zu verstehen, dass er Terpolymere mit einschließt.

Das olefinische Polymer enthält vorzugsweise mindestens 50 Gew.-% Propylen.

Besonders geeignete Folienrohstoffe sind kommerziell erhältliche Polypropylenhomopolymere oder Polypropylencopolymere einschließlich der Block- (Impact-) und Randompolymere.

Die Schmelzindizes der genannten Polymere müssen im für Flachfolienextrusion geeigneten Bereich liegen. Dieser Bereich sollte zwischen 0,3 und 15 g/10 min, vorzugsweise im Bereich von 0,8 bis 5 g/10 min (gemessen bei 230 °C/2,16 kg) liegen. Das Polypropylen ist vorzugsweise überwiegend isotaktisch aufgebaut. Der Biegemodul sollte mindestens 1000 MPa, vorzugsweise mindestens 1500 MPa, ganz besonders vorzugsweise mindestens 2000 MPa betragen.

Unter einem polaren nichtolefinischen Polymer werden alle Polymere verstanden, welche
a) kein Olefin wie zum Beispiel Ethylen, Propylen oder Butylen als Monomer enthalten und
b) als polare Komponente Heteroatome wie Schwefel, Stickstoff, Phosphor und vorzugsweise Sauerstoff enthalten.

Das polare nichtolefinische Polymer wird vorzugsweise aus der Gruppe der Polyester, Polyamide, Polyurethane, Polyoxymethylen, Polyarylensulfide und Polyarylenoxide ausgewählt. Besonders bevorzugt sind teilkristalline Polymere. Gemäß einer besonders vorteilhaft gestalteten Ausführungsform der Erfindung werden als polares nichtolefinisches Polymer Polybutylenterephthalat und/oder Polyoxymethylen gewählt.

Das polar modifizierte Polyolefin wird vorzugsweise aus der Gruppe der Copolymere von Olefinen mit Vinylestern, Methacrylsäure und Acrylsäure, besonders bevorzugt Ethylen-Vinylacetat- und Ethylen-(Meth)acrylat-Copolymere sowie deren Ester oder aus der Gruppe der Pfropfpolymere mit einer ungesättigten organischen Säure, besonders bevorzugt ein maleinsäureanhydrid-, methacrylsäure- oder acrylsäuregepropftes Polyolefin ausgewählt, wobei der Anteil an polar modifiziertem Polyolefin in der Mischung vorzugsweise im Bereich von 0,2 bis 10 Gew.-% liegt.

Die Polymere der Folie können in Reinform oder in Abmischung mit Additiven wie Antioxidantien, Lichtschutz-, Antiblock-, Gleit- und Verarbeitungshilfsmitteln, Füllstoffen, Farbstoffen, Pigmenten, Treib- oder Nucleierungsmitteln verwendet werden.

Der bevorzugte Prozess zur Herstellung der Folie beziehungsweise des unter Verwendung der Folie hergestellten Klebebandes A beinhaltet folgende Schritte:
- Polymere und gegebenenfalls Additive werden gemischt und in einem Extruder einer Flachfoliendüse zugeführt.
- Der Schmelzefilm wird dann auf einer so genannten "Chillroll" kontrolliert abgekühlt.
- Bevor die Folienbahn dem Reckwerk zugeführt wird, wird sie über temperierte Walzen auf eine geeignete Recktemperatur aufgeheizt.
- Dann wird die Folie im Kurzspalt in Maschinenrichtung orientiert.
- Die Trägerfolie wird durch Beschichtung oder schon vorher durch Coextrusion mit einer Klebemasse versehen.

Die Folie kann ein- oder mehrschichtig sein, vorzugsweise ist sie mehrschichtig besonders bevorzugt vom Typ ABC, wobei B die erfindungsgemäße Mischung enthält und A und C ganz oder überwiegend aus polyolefinischem Polymer bestehen. Durch die Coextrusion können Ablagerung beim Verstrecken der Folie und Probleme beim Beschichten mit Release, Primer oder Klebemasse vermieden werden.

Die Folie kann durch Kaschierung, Prägung oder Strahlenbehandlung modifiziert sein.

Die Folie kann mit Oberflächenbehandlungen versehen sein. Dies sind zum Beispiel zur Haftvermittlung Corona-, Flamm-, Fluor- oder Plasmabehandlung oder Beschichtungen von Lösungen oder Dispersionen oder flüssige strahlenhärtbare Materialien. Weitere mögliche Beschichtungen sind Bedruckungen und Antihaftbeschichtungen, zum Beispiel solche aus vernetzten Silikonen, Acrylaten (zum Beispiel Primal® P 376 LO), Polymeren mit Vinylidenchlorid oder Vinylchlorid als Monomer oder Stearylverbindungen wie Polyvinylstearylcarbamat oder Chromstearatkomplexen (zum Beispiel Quilon® C) oder Umsetzungsprodukten aus Maleinsäureanhydridcopolymeren und Stearylamin.

Wie bereits erwähnt, können die Folienträger der Klebebänder A und B identisch sein oder zumindest beide die beschriebene Mischung aus einem olefinischen und einem polaren nichtolefinischen Polymer enthalten.

Bevorzugt ist besteht der Folienträger des Klebebands B aus Polyethylen, Polypropylen, mono- oder biaxial orientiertem Polypropylen, Polyester, PA, PVC oder anderen Folien, besonders bevorzugt handelt es sich um MOPP.

Die Dicke der Trägerfolie des Klebebands B liegt vorzugsweise zwischen 15 und 200 µm, besonders bevorzugt zwischen 30 und 140 µm, ganz besonders bevorzugt zwischen 50 und 90 µm.

Eine Dicke bis zu 200 µm kann dann gewählt werden, wenn die durch das Klebeband hervorgerufenen Dickenabweichungen der aufeinander zu stapelnden Kartonzuschnitte oder Kartons von untergeordneter Wichtigkeit ist. Bevorzugt werden Dicken von maximal 140 µm.

Weiter vorzugsweise weist der Folienträger eine Zugfestigkeit von 200 N/mm² bis 300 N/mm², besonders vorzugsweise 220 N/mm² bis 260 N/mm², ganz besonders vorzugsweise 240 N/mm², und/oder eine Dehnbarkeit kleiner 35 % auf.

Um die Klebebänder A und B herzustellen, kann auf alle bekannten Klebemassensysteme zurückgegriffen werden. Neben Natur- oder Synthesekautschuk basierten Klebemassen sind insbesondere Polyacrylatklebemassen, vorzugsweise eine Acrylatschmelzhaftklebemasse, verwendbar. Möglich sind auch Silikonklebemassen.

Die Klebemassen in den Klebebändern A und B können unterschiedlich sein. Bevorzugt wird, dass die jeweils gleiche Klebemasse verwendet wird.

Die Beschichtungsstärke mit Klebemasse liegt vorzugsweise im Bereich von 18 bis 50 g/m², insbesondere 22 bis 29 g/m², (entspricht ungefähr einer Dicke von 18 bis 50 µm, weiter vorzugsweise 22 bis 29 µm).

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Folienträger werden ein- oder beidseitig, vorzugsweise einseitig, mit Haftkleber aus Lösung oder Dispersion oder 100 %ig (zum Beispiel aus der Schmelze) oder durch Coextrusion beschichtet.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind solche, wie sie in dieser Schrift für die Stabilisierung der Folie aufgeführt werden.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Eine bevorzugte Ausführungsform enthält einen Haftkleber aus Synthesekautschuk, Kohlenwasserstoffharz und Antioxidans.

Die Klebemasse kann in Längsrichtung in Form eines Streifens aufgebracht sein, der eine geringere Breite aufweist als die Trägerfolie des Klebebands. Je nach Verwendungsfall können auch mehrere parallele Streifen des Klebers auf der Trägerfolie beschichtet sein.

Die freie Oberseite der einseitig mit Klebemasse ausgerüsteten Klebebänder A und B kann mit einem Trennmittel, auch Release genannt, versehen sein.

Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C₁₄- bis C₂₈-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew. %, besonders bevorzugt 13 bis 18 Gew.-% des trennwirksamen Bestandteils.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Im Folgenden wird die Erfindung anhand mehrerer Figuren näher erläutert, ohne damit die Erfindung unnötig einschränken zu wollen.

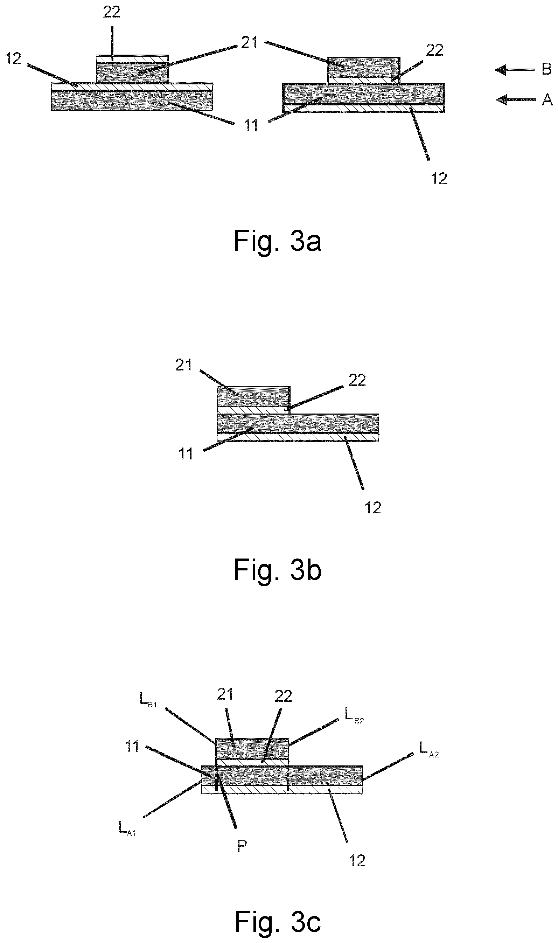

Die Figuren 3a bis 3c zeigen Aufreißsysteme, bei denen zwischen den Klebebändern kein Karton vorhanden ist und die damit nicht erfindungsgemäß sind.

In der Figur 3a ist gezeigt, dass die Anordnung der Klebebänder zueinander beliebig gewählt werden kann. Jedes Klebeband 1, 2 besteht aus einem Folienträger 11, 21, auf den jeweils eine Klebemasse 12, 22 aufgebracht ist.

Das Klebeband B kann mit der klebemassenfreien Seite des Folienträgers 21 auf die Klebemasse 12 des Klebebands A laminiert sein (linke Abbildung). In diesem Fall stellen die nicht abgedeckten Bereiche der Klebemasse 12 sowie die Klebemasse 22 des Klebebands B den Halt des Aufreißsystems auf dem gewählten Untergrund sicher.

Das Klebeband B könnte aber auch so auf das Klebeband A laminiert sein, dass die Klebemasse 22 direkt auf der Klebemasse 11 des Klebebands A liegt.

In der rechten Abbildung der Figur 3a ist gezeigt, dass die Klebemasse 22 des Klebebands B auf der klebemassenfreien Seite der Trägerfolie 11 angeordnet ist. In diesem Fall stellt die Klebemasse 12 den Halt des Aufreißsystems auf dem gewählten Untergrund sicher.

Die Figur 3b zeigt eine Ausführungsform, bei der das Klebeband B so auf dem Klebeband A angeordnet ist, dass die Trägerfolien 11, 21 kantenbündig abschließen.

Bevorzugt wird die Ausführungsform, bei der das Klebeband B mit einem Versatz auf dem Klebeband A aufgebracht ist, also in Bezug auf die Maschinenrichtung der beiden Klebebänder A, B nach innen versetzt ist. Damit liegen die beiden Längskanten L_{B1}, L_{B2} des Klebebands B (also die Kanten, die sich in Maschinenrichtung erstrecken) bei senkrechter Projektion in die Ebene des Klebebands A stets zwischen den beiden Längskanten L_{A1}, L_{A2} des Klebebands A. In der Figur 3c ist diese Ausführungsform des Klebebands gezeigt sowie die erwähnte Projektion P angedeutet.

Bei der Ausführungsform gemäß Figur 3b würde die eine Längskante L_{S1} direkt auf die Längskante L_{A1} des Klebebands A projiziert.

Die Klebebänder A und B sind also so übereinander angeordnet, dass die beiden Längskanten L_{B1}, L_{B2} des Klebebands B (also die Kanten, die sich in Maschinenrichtung erstrecken) bei senkrechter Projektion in die Ebene des Klebebands A auf oder zwischen den beiden Längskanten L_{A1}, L_{A2} des Klebebands A liegen oder zumindest auf einer den beiden Längskanten L_{A1}, L_{A2} des Klebebands A.

Besonders bevorzugt sind die in der Figur 3a gezeigten Ausführungsformen, bei denen das Klebeband B mittig auf dem Klebeband A ist, so dass sich ein symmetrischer Aufbau des Aufreißsystems ergibt.

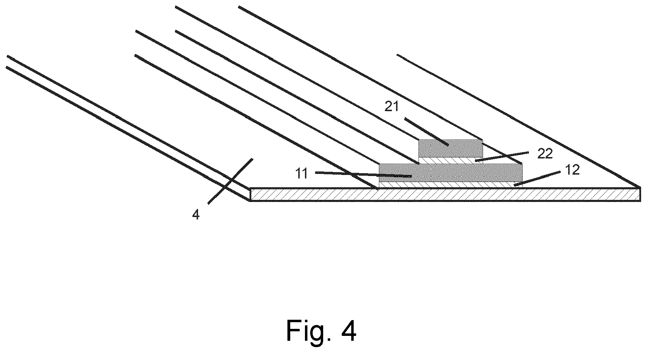

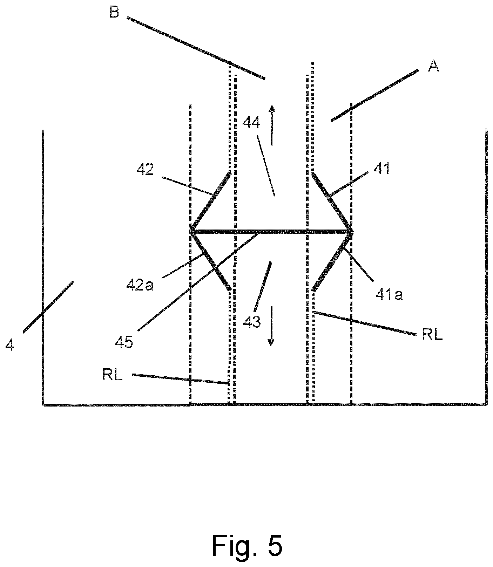

In der Figur 4 ist dargestellt, wie ein nichterfindungsgemäßes Aufreißsystem auf der Unterseite eines Kartons 4 aufgebracht ist, und in der Figur 5, wie die Oberseite des Kartons 4 aussieht. In der Figur 5 sind die auf der Unterseite des Kartons 4 aufgebrachten Klebebänder A, B gestrichelt angedeutet.

Des Weiteren ist in der Figur 5 eine bevorzugte Öffnungsmöglichkeit des Kartons 4 unter Verwendung eines nichterfindungsgemäßen Aufreißstreifens gezeigt.

In dem Karton 4 ist eine Anstanzung vorhanden, die zwei Anfasser 43, 44 erzeugt. Die Anstanzung besteht aus zwei Paaren zweier V-förmig angeordneter Schenkel 41, 42, 41a, 42a, wobei sich bei beiden Schenkel 41, 42, 41a, 42a eines jeden Paares im potentiellen Schnittpunkt nicht schneiden. Die Schenkel 41, 42, 41a, 42a sind durch den Karton 4 und durch das Klebeband A durchgestanzt. Weiterhin ist die Verbindungslinie 45, die die Endpunkte der Schenkel 41, 42, 41a, 42a miteinander verbindet, durch den Karton 4, das Klebeband A und das Klebeband B durchgestanzt.

Zum Öffnen des Kartons 4 wird einer der beiden Anfasser 43, 44, beispielsweise der Anfasser 43, gegriffen und hochgeklappt. Die durchgestanzten Schenkel 41a, 42a erzeugen einen Aufreißstreifen, dessen Breite dem Abstand der Enden aufeinander zulaufenden Schenkel 41a, 42a entspricht. Die Breite des Aufreißstreifens ist durch die parallelen Reißlinien R_{L} angedeutet. Beim Ziehen am Anfasser 43 in Richtung des dargestellten Pfeils trennt sich das Aufreißsystem entlang der Linien R_{L} auf. Dieser entstehende Aufreißstreifen besteht aus dem durchtrennten Karton 4, dem Klebeband B sowie dem aufgetrennten Klebeband A.

Aufgrund der hervorragenden Eigenschaften der beschriebenen Folie verjüngt sich der Aufreißstreifen während des Öffnens auch nicht, so dass der Aufreißstreifen den gesamten Karton durchtrennt.

Durch Ziehen am anderen Anfasser 44, ebenfalls in die durch den Pfeil angedeutete Richtung, entsteht ein zweiter Aufreißstreifen.

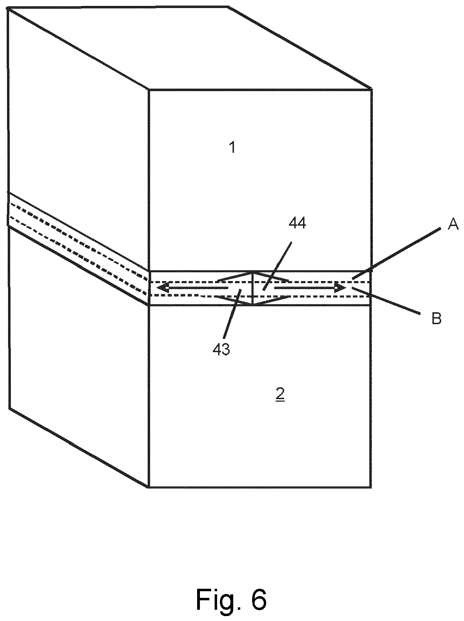

Weiter vorzugsweise wird ein nicht erfindungsgemäßes Aufreißsystem eingesetzt, um zwei Verpackungen (oder andere Körper), beispielsweise zwei Kartons, vorübergehend miteinander zu verbinden. Dies ist in der Figur 6 gezeigt. Das Klebeband A dient dazu, um zwei Kartons 1, 2 miteinander zu verknüpfen, indem das Klebeband A einmal vollständig über alle vier Seiten der Kartons 1, 2 jeweils im Kantenbereich umlaufend aufgebracht wird. Das Klebeband B, das mittig auf dem Klebeband A angeordnet ist, befindet sich unterhalb des Klebebands A, so dass das Klebeband B gestrichelt dargestellt ist.

Die in der Figur 5 ausführlich beschriebene Aufreißmöglichkeit ist in dem Aufreißstreifen vorgesehen. Zum Trennen der beiden Kartons wird an einem oder beiden Anfassern 43, 44 gezogen, das Aufreißsystem trennt sich auf, so dass die beiden Kartons 1, 2 vereinzelt werden können, wenn das Aufreißsystem vollständig durchtrennt wird.

In einer Variante wird nur das Klebeband A benutzt, um zwei Verpackungen oder andere Körper miteinander zu verbinden.

Das Klebebandsystem wird als Aufreißstreifen auf einem Karton 4 verwendet, der aus einem äußeren Liner 46 und einem inneren Liner 47 besteht, wobei zwischen den Linern 46, 47 zumindest eine Welle 48 aus Pappe angeordnet ist, wobei das Klebeband A auf der Innenseite des äußeren Liners 46 und das Klebeband B auf der

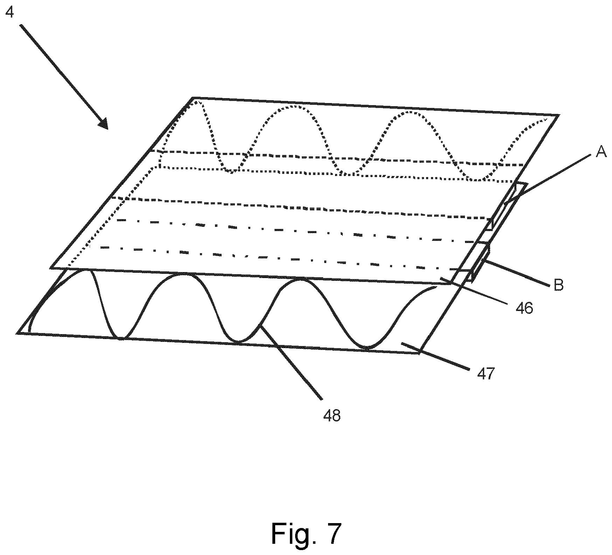

Außenseite des inneren Liners 47 aufgebracht sind, so dass das Klebeband B unterhalb des Klebebands A angeordnet ist. Eine beispielshafte Ausführungsform dieser Verwendung ist in der Figur 7 dargestellt.

Zwischen den beiden Linern 46, 47 ist eine Welle 48 vorhanden, wobei die nicht sichtbaren Bereiche des Kartons 4 punktiert angedeutet sind.

Das Klebeband B ist auf der Außenseite des inneren Liners 47 verklebt, wobei der weitere Verlauf des Klebebands B strichpunktiert angedeutet ist.

Das Klebeband A ist auf der Innenseite des äußeren Liners 46 verklebt, wobei der weitere Verlauf des Klebebands A gestrichelt angedeutet ist.

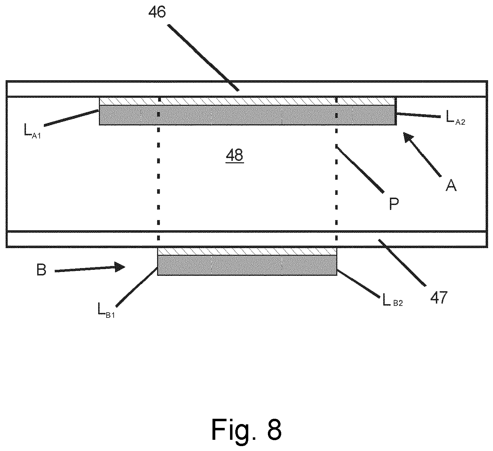

Figur 8 zeigt das erfindungsgemäße Aufreißsystem nochmals in der in Figur 7 gezeigten Verwendung in einer Wellpappe 4. Die Welle 48 läuft dabei lotrecht aus der Zeichnungsebene hinaus. Das Klebeband B ist auf der Außenseite des inneren Liners 47 verklebt und das Klebeband A auf der Innenseite des äußeren Liners 46.

Wie bereits in der Figur 3c erläutert wird die Ausführungsform bevorzugt, bei der das Klebeband B mit einem Versatz gegenüber dem Klebeband A aufgebracht ist, also in Bezug auf die Maschinenrichtung der beiden Klebebänder A, B nach innen versetzt ist. Damit liegen die beiden Längskanten L_{B1}, L_{B2} des Klebebands B (also die Kanten, die sich in Maschinenrichtung erstrecken) bei senkrechter Projektion in die Ebene des Klebebands A stets zwischen den beiden Längskanten L_{A1}, L_{A2} des Klebebands A oder eine Längskante L_{B1}, L_{B2} des Klebebands B liegt auf einer der Längskanten L_{A1}, L_{A2} des Klebebands A.

Auch die anderen in Figur 3a und 3b gezeigten Varianten des Aufreißsystems lassen sich sinngemäß auf diese Ausführungsform des Aufreißsystems übertragen.

Weiter vorzugsweise sind das Klebeband A und das Klebeband B in Form einer in sich geschlossenen Linie auf dem Korpus des Kartons aufgebracht oder in Form mehrerer geschlossenen Linien in unterschiedlichen Höhen des Korpus.

Bevorzugt liegt die von den Klebebändern gebildete Linie in einer Ebene, die parallel zum Boden des aufrecht hingestellten Korpus ausgerichtet ist.

Die Linie kann auch eine Ecke des Korpus derart umgeben, dass nach dem Aufreißen ein tetraederförmiges Teil vom restlichen Korpus abgetrennt wird.

In einer Variante der Erfindung bilden die Klebebänder nicht eine in sich geschlossene Linie, sondern sparen eine Seitenwand des Kartons aus. Wird das Aufreißsystem dann entfernt, bleibt die letzte Wand unzerstört und kann so eine Scharnierfunktion übernehmen, insbesondere wenn in der Fortsetzung der Linie die Wand eine Falzung aufweist. Es bildet sich so ein Deckel, der über das Scharnier auf- und zugeklappt werden kann.

Vorzugsweise sind das Klebeband A und das Klebeband B rechtwinklig zur Welle des Kartons aufgebracht.

Gemäß einer weiteren bevorzugten Ausführungsform ist auf dem Karton eine Anstanzung vorhanden, die das Klebeband A und vorzugsweise den darunter befindlichen Karton vollständig durchtrennt und die als Anfasser für den Aufreißtreifen beim Aufreißen des Kartons dient.

Das Klebeband B liegt unterhalb des Anfassers und ist vorzugsweise ebenfalls durch die Anstanzung durchtrennt. Wird der Anfasser gegriffen, so befindet sich auf der Unterseite des Anfassers das Klebeband B des sich ergebenden Aufreißstreifens.

Durch die Anstanzung wird auch die spätere Breite des Aufreißstreifens festgelegt.

Zum Aufreißen einer mit dem erfindungsgemäßen Klebebandsystem ausgerüsteten Verpackung wird vorzugsweise die gesamte Breite des Klebebands B benutzt, während vom Klebeband A vorzugsweise nur ein Teilbereich für den Aufreißstreifen genutzt wird.

Die Breite des Klebebands A liegt vorzugsweise zwischen 10 und 50 mm, besonders bevorzugt zwischen 12 und 25 mm.

Die Breite des Klebebands B liegt vorzugsweise zwischen 2 und 10 mm, besonders bevorzugt zwischen 3 und 6 mm.

Bevorzugt wird die Breite des Klebebands geringer gewählt als die Breite des Klebebands A, und zwar insbesondere im Verhältnis zwischen 1:2 und 1:4. Möglich ist aber auch die Ausführungsform, bei der die Breiten der Klebebänder A und B identisch sind.

Der aus dem Klebebandsystem gebildete Aufreißstreifen hat gemäß einer bevorzugten Ausführungsform der Erfindung eine Breite von 2 bis 10 mm, besonders bevorzugt zwischen 3 und 6 mm.

Die Anstanzung kann in Form zweier V-förmig angeordneter Schenkel, die sich im potentiellen Schnittpunkt nicht berühren, ausgeführt sein.

Weiter vorzugsweise verbindet eine Stanzlinie die beiden anderen Enden der Schenkel, so dass sich die Form eines Dreiecks ergibt, bei dem die Spitze fehlt. Dieses Dreieck bildet den Anfasser am Aufreißstreifen.

Um einen geeigneten Anfasser zu erzeugen, muss das Klebeband A in Querrichtung, also gegen die Reckung in irgendeiner Form durchtrennt werden. Zur Festlegung der Breite des Aufreißstreifens - wenn der Aufreißstreifen mittig im Klebeband A angeordnet sein soll -, müssen zwei Einschnitte in Längsrichtung das Klebeband A durchtrennen. Beispielsweise könnte das Klebeband A an zwei Punkten durchstochen werden, deren Verbindungslinie in das Klebeband A eingeschnitten wird (vorzugsweise ist diese Verbindungslinie rechtwinklig zur Längskante ausgerichtet). Soll der Aufreißstreifen im Randbereich des Klebebands A gebildet werden, reicht ein einziger Einschnitt.

Auf diese Weise ergibt sich die bevorzugte Ausführungsform der Erfindung, nämlich dass der sich der unter anderem aus dem Klebeband A ergebende Aufreißstreifen eine geringere Breite aufweist als das Klebeband A.

Der Anfasser muss nicht zwingend gestanzt werden. Es ist auch möglich, den Anfasser unter Verwendung eines Messers zu erzeugen, indem das Klebeband A in Querrichtung zumindest zum Teil durchtrennt wird und an der Trennlinie zwei im Wesentlichen in Maschinenrichtung weisende Kerben in das Klebeband A eingebracht werden, wobei der Abstand der Kerben die Breite des Aufreißstreifens festlegt. Die Kerben und der Einschnitt legen einen Anfasserbereich fest, der den Beginn des Aufreißstreifens bildet. Dabei ist darauf zu achten, dass auch das Klebeband B gleichzeitig durchtrennt wird.

Beispielsweise wird das beschriebene Klebebandsystem während der Wellpappenproduktion auf der Wellpappenanlage verklebt. In weiteren Schritten wird der nach der Wellpappanlage entstandene Bogen weiter zu einer Box konfektioniert. Auf der Box ist zumindest eine Anstanzung eingebracht, die es ermöglicht, zum späteren Öffnen der Verpackung einen Anfasser aus dem Klebebandsystem herauszulösen. An diesem Anfasser wird gezogen und der sich bildende Anfasserstreifen trennt während des Öffnungsvorgangs die direkt über ihm befindliche Papplage aus der Box.

Des Weiteren ist vom Erfindungsgedanken umfasst ein Karton, der aus einem äußeren Liner und einem inneren Liner besteht, wobei zwischen den Linern zumindest eine Welle aus Pappe angeordnet ist, ausgerüstet mit einem erfindungsgemäßen Klebebandsystem, wobei das Klebeband A auf der Innenseite des äußeren Liners und das Klebeband B auf der Außenseite des inneren Liners aufgebracht sind, so dass das Klebeband B unterhalb des Klebebands A angeordnet ist.

Das Klebeband A zeigt insbesondere mit einer Synthesekautschuk basierenden Klebemasse, die eine ausreichende Klebkraft und eine hohe Anfassklebrigkeit (Tack) aufweist, eine gute Verklebung auf verschiedenen Papieruntergründen.

Aufgrund des speziellen Folienträgers pflanzen sich Risse ausgehend von der Anstanzung überraschend in diesem gerade und parallel zur Maschinenrichtung (x-Richtung) fort.

Weiter überaschenderweise reißt die Folie nicht nur quer zur Verstreckungsrichtung nicht weiter, sondern unterstützt das Weiterreißen der Folie in Längsrichtung zuverlässig. Das heißt, dass kein Verjüngen in y- (in Querrichtung des Streifens) oder aber auch in z-Richtung (Richtung, die die Richtung des Trägers definiert) stattfindet. Dadurch wird das Weiterreißen nur in x-Richtung (Längs- oder Maschinenrichtung) möglich. Des Weiteren ist das kontinuierliche Weiterreißen in x-Richtung leicht zusätzlich zum Durchreißen der Wellpappe händisch zu erledigen.

Gegebenenfalls stellt sich eine geringfügige Verjüngung oder Verbreiterung in Querrichtung ein, vorzugsweise nicht mehr als 5 Promille bezogen auf die Länge.

Die nötigen Festigkeiten können dabei mit deutlich geringeren Materialstärken erreicht werden, so dass die Gesamtdicke an Klebeband dabei um bis zu 50 % im Vergleich zum vorher beschriebenen Adalissystem reduziert werden kann. Dies führt zu weniger Abnutzung der Bedruckung, einer verbesserten Stabilität bei Stapelung der Kartons, und es sind größere Lauflängen der Klebebandspulen möglich, das heißt, größere Fertigungskampagnen können gefahrlos ohne Unterbrechung des Prozesses gefahren werden.

Das Klebeband B zeigt ebenfalls insbesondere mit einer Synthesekautschuk basierenden Klebemasse, die eine ausreichende Klebkraft und eine hohe Anfassklebrigkeit (Tack) aufweist, eine gute Verklebung auf verschiedenen Papieruntergründen.

Des Weiteren weist der Folienträger eine hohe Zugfestigkeit auf, denn das Klebeband muss die hauptsächliche Last beim Öffnen des Kartons aufnehmen und darf nicht reißen. Des Weiteren zeigt der Träger eine geringe Dehnung, insbesondere eine Dehnbarkeit kleiner 35 %, weil es sich sonst unter den gegebenen Belastungen zu stark dehnt.

Die Erfindung wird anhand einiger Beispiele näher erläutert, ohne mit diesen die Erfindung in irgendeiner Weise beschränken zu wollen.

### Beispiele

### Prüfverfahren

Die Messungen werden bei einem Prüfklima von 23 ± 1 °C und 50 ± 5 % rel. Luftfeuchte durchgeführt.

### Zugdehnungsverhalten

Das Zugdehnungsverhalten des Klebebandes wird an Prüflingen (rechteckige, 100 mm lange und 15 mm breite Prüfstreifen) nach DIN EN 14410:2003 527-3/2/300 mit einer Prüfgeschwindigkeit von 300 mm/min, einer Einspannlänge von 100 mm und einer Vorkraft von 0,3 N/cm ermittelt, wobei Muster zur Ermittlung der Daten mit scharfen Klingen zugeschnitten werden.

Das Zugdehnungsverhalten wird, wenn nicht anders angegeben, in Maschinenrichtung (MD, Laufrichtung) geprüft. Die Kraft (Zugfestigkeit) wird in N/Streifenbreite und die Bruchdehnung in % ausgedrückt. Die Prüfergebnisse, insbesondere die Bruchdehnung (Reißdehnung), sind durch fünf Messungen statistisch abzusichern.

### Schälfestigkeit (Klebkraft, KK)

Zur Messung der Klebkräfte wurden 19 mm breite Prüfstreifen blasenfrei auf eine fein geschliffene (Schmirgelpapier mit FEPA-Körnung 240) Stahlplatte aus rostfreiem Stahl geklebt und mit einer gummiumwickelten 2-kg-Rolle mit einer Geschwindigkeit von 10m/min angedrückt. Die Stahlplatte und das überstehende Ende des Klebebandes wurden dann in der Weise in die Enden einer Zugprüfmaschine gespannt, dass ein Abzugswinkel von 180° entstand. Das Klebeband wurde mit einer Geschwindigkeit von 300 mm/min von der Stahlplatte abgezogen. Die Angabe der Klebkraft erfolgt in N/cm.

### Scherstandzeit (Holding-Power, HP)

Die Scherstandzeit gibt die Verklebungsfestigkeit für eine parallel zum verklebten Band angreifende Belastungskraft an. Sie ist die Zeit, die bis zum völligen Abscheren eines belasteten Klebebandes von einer Stahlplatte gemessen wird.

Zur Bestimmung der HP-Werte wird ein 19 mm breiter Prüfstreifen so auf ein vorbehandeltes Stahlplättchen geklebt, dass eine Verklebungsfläche von 19 x 20 mm² entsteht. An das überstehende Ende des Klebebandes wird mit Hilfe einer Klammer ein 1 kg-Gewicht gehängt, so dass eine senkrechte Zugkraft von 5,15 N pro 1 cm Bandbreite übertragen wird.

Die Einheit der Scherstandzeit ist Minuten. Steht vor den Werten ein "> "-Zeichen, bedeutet das, dass die Messungen nach dieser Zeit abgebrochen wurden, da noch keinerlei Scheren zu erkennen war.

### Dicke

Die wird nach DIN 53370 bestimmt.

### Rohstoffe

Dow 7C06:
   PP-Blockcopolymer, MFI 1,5 g/10 min, nicht nucleiert, Biegemodul 1280 MPa (Dow Chemical)
Bormod HD 905 CF:
   PP-Homopolymer, MFI 6 g/10 min, Biegemodul 2150 MPa, enthält ein α-Nucleierungsmittel (Borealis)
Dowlex 2032:
PE-LLD, MFI 2 g/10 min (Dow Chemical)
Styron 457:
   PS-HI, MFI 3 g/10 min, Biegemodul 2200 MPa (Dow Chemical)
EVAL G156B:
   EVAL Ethylengehalt 48 mol %, MFI 6,4 g/10min, Biegemodul 2800 MPa (EVAL Europe)
Licocene PP MA 7452 GR TP:
   PP-g-MA, mit Maleinsäureanhydrid gepfropftes Metallocenpolypropylenwachs (Clariant)
Hostaform C9021 natur:
   POM, MFI 8 g/10 min, Biegemodul 2800 MPa (Ticona)
Celanex 2002-2 natur:
   PBT, MFI 20, Biegemodul 2500 MPa (Ticona)

Im Folgenden werden anhand von Beispielen vorteilhafte Ausführungsformen des erfindungsgemäßen Klebebands beschrieben, ohne die Erfindung damit unnötig einschränken zu wollen.

### Beispiel 1

Die Rohstoffe werden compoundiert und granuliert. Das Granulat wird einer Einschneckenextrusionsanlage zugeführt. Der Folienträger für das Klebeband A wird auf dieser Einschneckenextrusionsanlage mit Flachdüse mit flexibler Düsenlippe in einer Schicht hergestellt, gefolgt von Chillrollstation und einer einstufigen Kurzspaltreckanlage. Dow 7C06, Celanex 2002-2 natur und Licocene PP MA 7452 GR TP werden im Verhältnis 15:4:1 gemischt und extrudiert. Die Düsentemperatur beträgt 230 °C. Chillroll-Temperaturen und Reckwalzen-Temperaturen werden so eingestellt, dass die Kristallinität der Folie vor und nach dem Reckvorgang so hoch wie möglich wird. Das Reckverhältnis beträgt 1:5.

**Folieneigenschaften:**

| | |
|---|---|
| Zugfestigkeit/ N/mm² | 240 |
| Breite / mm | 25 |
| Reißdehnung / % | 30 |
| Dicke / µm | 60 |

Die Folie wird auf der Oberseite mit 0,07 g/m² Carbamatrelease beschichtet und getrocknet.

Der Klebstoff wird aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidans Irganox® 1010 in der Schmelze gemischt und bei 150 °C mit einer Düse auf die Folienunterseite aufgetragen, und zwar mit 28 g/m².

Es ergibt sich eine KK auf Stahl von 5 N/cm und eine Scherfestigkeit von größer 3000 min.

Der Folienträger des Klebebands B ist eine Folie aus MOPP.

**Folieneigenschaften:**

| | |
|---|---|
| Zugfestigkeit/ N/mm² | 240 |
| Breite / mm | 4 |
| Reißdehnung / % | 27 |
| Dicke / µm | 60 |

Die Folie wird auf der Oberseite mit 0,05 g/m² Silikonrelease beschichtet und getrocknet. Der Klebstoff wird aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidans Irganox® 1010 in der Schmelze gemischt und bei 150 °C mit einer Düse auf die Folienunterseite aufgetragen, und zwar mit 25 g/m².

Es ergibt sich eine KK auf Stahl von 5 N/cm und eine Scherfestigkeit von größer 3000 min.

Die Klebebänder A und B werden wie erfindungsgemäß beschrieben auf einem Karton aus einer 2.30 Doppelwelle gemäß RAL-GZ 492 (DEUTSCHES INSTITUT FÜR GÜTESICHERUNG UND KENNZEICHNUNG E.V.) aufgebracht.

Nach dem Aufreißen ergibt sich eine saubere Kante und nur eine geringe Beeinträchtigung des äußeren Liners.

### Beispiel 2

Es wird der der Folienträger für das Klebeband A aus Beispiel 1 verwendet, allerdings mit einer Breite von 15 mm.

**Folieneigenschaften:**

| | |
|---|---|
| Zugfestigkeit/ N/mm² | 240 |
| Breite / mm | 15 |
| Reißdehnung / % | 30 |
| Dicke / µm | 60 |

Der Folienträger des Klebebands B ist eine Folie aus MOPP.

**Folieneigenschaften:**

| | |
|---|---|
| Zugfestigkeit/ N/mm² | 260 |
| Breite / mm | 6 |
| Reißdehnung / % | 30 |
| Dicke / µm | 85 |

Die Folie wird auf der Oberseite mit 0,05 g/m² Silikonrelease beschichtet und getrocknet. Der Klebstoff wird aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidans Irganox® 1010 in der Schmelze gemischt und bei 150 °C mit einer Düse auf die Folienunterseite aufgetragen, und zwar mit 26 g/m².

Es ergibt sich eine KK auf Stahl von 5 N/cm und eine Scherfestigkeit von größer 3000 min.

Die Klebebänder A und B werden wie erfindungsgemäß beschrieben auf einem Karton aus einer 1.40 Einfachwelle gemäß RAL-GZ 492 (DEUTSCHES INSTITUT FÜR GÜTESICHERUNG UND KENNZEICHNUNG E.V.) aufgebracht.

Nach dem Aufreißen ergibt sich eine saubere Kante und nur eine geringe Beeinträchtigung des äußeren Liners.

## Patentansprüche

1. Verwendung eines Klebebandsystems als Aufreißstreifen auf einem Karton, der aus einem äußeren Liner und einem inneren Liner besteht,
wobei zwischen den Linern zumindest eine Welle aus Pappe angeordnet ist,
wobei das Klebebandsystem aus einem, zumindest einseitig mit einer Klebebeschichtung ausgerüsteten Klebeband A mit einem Folienträger, wobei die Folie eine monoaxial in Längsrichtung des Streifens verstreckte Polyolefinfolie ist und die Folie eine Mischung aus einem olefinischen und einem polaren nichtolefinischen Polymer enthält, und einem zumindest einseitig mit einer Klebebeschichtung ausgerüsteten Klebeband B mit einem Folienträger besteht,
wobei die Klebebänder A und B übereinander angeordnet sind und
wobei das Klebeband A auf der Innenseite des äußeren Liners und das Klebeband B auf der Außenseite des inneren Liners aufgebracht sind, so dass das Klebeband B unterhalb des Klebebands A angeordnet ist.

2. Verwendung eines Klebebandsystems nach Anspruch 1 als Aufreißstreifen auf einem Karton,
**dadurch gekennzeichnet, dass**
in der Folie des Klebebands A der Anteil an polarem nichtolefinischem Polymer in der Mischung der Folie des Klebebands im Bereich von 5 bis 50 Gew.-%, vorzugsweise 20 bis 30 Gew.-% liegt.

3. Verwendung eines Klebebandsystems nach Anspruch 1 oder 2 als Aufreißstreifen auf einem Karton,
**dadurch gekennzeichnet, dass**
der Folienträger des Klebebands A und der Folienträger des Klebebands B eine monoaxial in Längsrichtung des Streifens verstreckte Polyolefinfolie ist und die Folie eine Mischung aus einem olefinischen und einem polaren nichtolefinischen Polymer enthält, wobei vorzugsweise die beiden Folienträger identisch sind.

4. Verwendung eines Klebebandsystems nach zumindest einem der Ansprüche 1 bis 3 als Aufreißstreifen auf einem Karton,
**dadurch gekennzeichnet, dass**
die Folie des Klebebands A
• eine Dicke von 15 bis 200 µm, vorzugsweise 30 bis 140 µm, besonders vorzugsweise 50 bis 100 µm aufweist und/oder
• in Längsrichtung ein Reckverhältnis von mindestens 1:4,5, vorzugsweise mindestens 1:6.

5. Verwendung eines Klebebandsystems nach zumindest einem der vorherigen Ansprüche als Aufreißstreifen auf einem Karton,
**dadurch gekennzeichnet, dass**
in der Folie des Klebebands A das olefinische Polymer zu mindestens 50 Gew.-% Propylen enthält.

6. Verwendung eines Klebebandsystems nach zumindest einem der vorherigen Ansprüche als Aufreißstreifen auf einem Karton,
**dadurch gekennzeichnet, dass**
in der Folie des Klebebands A das polare nichtolefinische Polymer gewählt ist aus der Gruppe der Polyester, der Polyamide, des Polyoxymethylens, der Polyarylensulfide, der Polyarylenoxide und der Polyurethane, bevorzugt Polybutylenterephthalat, wobei das nichtolefinische Polymer bevorzugt teilkristallin ist.

7. Verwendung eines Klebebandsystems nach zumindest einem der vorherigen Ansprüche als Aufreißstreifen auf einem Karton,
**dadurch gekennzeichnet, dass**
der Folienträger des Klebebands B eine Zugfestigkeit gemessen nach der angegebenen Messmethode von 200 N/mm² bis 300 N/mm², vorzugsweise 220 N/mm² bis 260 N/mm², weiter vorzugsweise 240 N/mm², und/oder eine Dehnbarkeit gemessen nach der angegebenen Messmethode kleiner 35 % aufweist.

8. Verwendung eines Klebebandsystems nach zumindest einem der vorherigen Ansprüche als Aufreißstreifen auf einem Karton,
**dadurch gekennzeichnet, dass**
das Klebeband A und das Klebeband B in Form einer in sich geschlossenen Linie auf dem Korpus des Kartons aufgebracht sind oder in Form mehrerer geschlossenen Linien in unterschiedlichen Höhen des Korpus.

9. Verwendung eines Klebebandsystems nach zumindest einem der vorherigen Ansprüche als Aufreißstreifen auf einem Karton,
**dadurch gekennzeichnet, dass**
das Klebeband A und das Klebeband B rechtwinklig zur Welle des Kartons aufgebracht sind.

10. Verwendung eines Klebebandsystems nach zumindest einem der vorherigen Ansprüche als Aufreißstreifen auf einem Karton,
**dadurch gekennzeichnet, dass**
auf dem Karton eine Anstanzung vorhanden ist, die das Klebeband A und vorzugsweise den darunter befindlichen Karton vollständig durchtrennt und die als Anfasser für den Aufreißtreifen beim Aufreißen des Kartons dient.

11. Verwendung eines Klebebandsystems nach zumindest einem der vorherigen Ansprüche als Aufreißstreifen auf einem Karton,
**dadurch gekennzeichnet, dass**
die Anstanzung in Form zweier V-förmig angeordneter Schenkel, die sich im potentiellen Schnittpunkt nicht berühren, ausgeführt ist.

12. Verwendung eins Klebebandsystems nach Anspruch 11 als Aufreißstreifen auf einem Karton,
**dadurch gekennzeichnet, dass**
eine Stanzlinie die beiden anderen Enden der Schenkel verbindet, so dass sich die Form eines Dreiecks ergibt, bei dem die Spitze fehlt.

13. Verwendung des Klebebandsystems nach zumindest einem der vorherigen Ansprüche als Aufreißstreifen auf einem Karton,
**dadurch gekennzeichnet, dass**
der sich der aus dem Klebeband A und dem Klebeband B ergebende Aufreißstreifen eine geringere Breite aufweist als das Klebeband A.

14. Karton, der aus einem äußeren Liner und einem inneren Liner besteht, wobei zwischen den Linern zumindest eine Welle aus Pappe angeordnet ist, ausgerüstet mit einem erfindungsgemäßen Klebebandsystem, wobei das Klebebandsystem aus einem einem Folienträger, wobei die Folie eine monoaxial in Längsrichtung des Streifens verstreckte Polyolefinfolie ist und die Folie eine Mischung aus einem olefinischen und einem polaren nichtolefinischen Polymer enthält, und einem zumindest einseitig mit einer Klebebeschichtung ausgerüsteten Klebeband B mit einem Folienträger besteht, wobei die Klebebänder A und B übereinander angeordnet sind und
wobei das Klebeband A auf der Innenseite des äußeren Liners und das Klebeband B auf der Außenseite des inneren Liners aufgebracht sind, so dass das Klebeband B unterhalb des Klebebands A angeordnet ist.

## Claims

1. Use of an adhesive tape system as tear strip on a carton consisting of an outer liner and an inner liner,
there being disposed between the liners at least one corrugation of card,
the adhesive tape system consisting of an adhesive tape A furnished on at least one side with an adhesive coating and having a film carrier, the film being a polyolefin film oriented monoaxially in the longitudinal direction of the strip and the film comprising a mixture of an olefinic polymer and a polar nonolefinic polymer, and consisting of an adhesive tape B furnished on at least one side with an adhesive coating and having a film carrier,
the adhesive tapes A and B being disposed one above the other and
the adhesive tape A being applied on the inside of the outer liner and the adhesive tape B being applied on the outside of the inner liner, so that the adhesive tape B is disposed beneath the adhesive tape A.

2. Use of an adhesive tape system according to Claim 1 as tear strip on a carton,
**characterized in that**
in the film of the adhesive tape A the fraction of polar nonolefinic polymer in the mixture of the film of the adhesive tape is in the range from 5 to 50 wt%, preferably 20 to 30 wt%.

3. Use of an adhesive tape system according to Claim 1 or 2 as tear strip on a carton,
**characterized in that**
the film carrier of the adhesive tape A and the film carrier of the adhesive tape B is a polyolefin film oriented monoaxially in the longitudinal direction of the strip, and the film comprises a mixture of an olefinic polymer and a polar nonolefinic polymer, the two film carriers preferably being identical.

4. Use of an adhesive tape system according to at least one of Claims 1 to 3 as tear strip on a carton,
**characterized in that**
the film of the adhesive tape A has
• a thickness of 15 to 200 µm, preferably 30 to 140 µm, more preferably 50 to 100 µm, and/or
• a draw ratio in longitudinal direction of at least 1:4.5, preferably at least 1:6.

5. Use of an adhesive tape system according to at least one of the preceding claims as tear strip on a carton,
**characterized in that**
in the film of the adhesive tape A the olefinic polymer contains at least 50 wt% of propylene.

6. Use of an adhesive tape system according to at least one of the preceding claims as tear strip on a carton,
**characterized in that**
in the film of the adhesive tape A the polar nonolefinic polymer is selected from the group of polyesters, polyamides, polyoxymethylene, polyarylene sulfides, polyarylene oxides and polyurethanes, preferably polybutylene terephthalate, the nonolefinic polymer preferably being semicrystalline.

7. Use of an adhesive tape system according to at least one of the preceding claims as tear strip on a carton,
**characterized in that**
the film carrier of the adhesive tape B has a tensile strength as measured according to the measurement method stated of 200 N/mm² to 300 N/mm², preferably 220 N/mm² to 260 N/mm², more preferably 240 N/mm², and/or a stretchability as measured according to the measurement method stated of less than 35%.

8. Use of an adhesive tape system according to at least one of the preceding claims as tear strip on a carton,
**characterized in that**
the adhesive tape A and the adhesive tape B are applied in the form of a self-contained line on the body of the carton or in the form of two or more contained lines at different heights on the body.

9. Use of an adhesive tape system according to at least one of the preceding claims as tear strip on a carton,
**characterized in that**
the adhesive tape A and the adhesive tape B are applied at right angles to the corrugation of the carton.

10. Use of an adhesive tape system according to at least one of the preceding claims as tear strip on a carton,
**characterized in that**
on the carton there is a kisscut score which completely severs the adhesive tape A and, preferably, the underlying carton and which serves as a grip tab for the tear strip when the carton is torn open.

11. Use of an adhesive tape system according to at least one of the preceding claims as tear strip on a carton,
**characterized in that**
the kisscut score is executed in the form of two limbs in a V-shape arrangement which do not contact one another at the potential intersection point.

12. Use of an adhesive tape system according to Claim 11 as tear strip on a carton,
**characterized in that**
a diecut line joins the other two ends of the limbs, producing the form of a triangle with its apex missing.

13. Use of the adhesive tape system according to at least one of the preceding claims as tear strip on a carton,
**characterized in that**
the tear strip resulting from the adhesive tape A and the adhesive tape B is smaller in width than the adhesive tape A.

14. Carton consisting of an outer liner and an inner liner, there being disposed between the liners at least one corrugation of card, furnished with an adhesive tape system of the invention, the adhesive tape system consisting of an adhesive tape A furnished on at least one side with an adhesive coating and having a film carrier, the film being a polyolefin film oriented monoaxially in the longitudinal direction of the strip and the film comprising a mixture of an olefinic polymer and a polar nonolefinic polymer, and consisting of an adhesive tape B furnished on at least one side with an adhesive coating and having a film carrier,
the adhesive tapes A and B being disposed one above the other and
the adhesive tape A being applied on the inside of the outer liner and the adhesive tape B being applied on the outside of the inner liner, so that the adhesive tape B is disposed beneath the adhesive tape A.

## Revendications

1. Utilisation d'un système de ruban adhésif comme bandelette d'ouverture par déchirure sur un carton, qui est constitué par un revêtement externe et un revêtement interne,
au moins un papier ondulé en carton-pâte étant disposé entre les revêtements,
le système de ruban adhésif étant constitué par un ruban adhésif A, pourvu sur au moins une face d'un revêtement adhésif, présentant un support en feuille, la feuille étant une feuille en polyoléfine étirée monoaxialement dans la direction longitudinale de la bandelette, et la feuille contenant un mélange d'un polymère oléfinique et d'un polymère non oléfinique polaire, et par un ruban adhésif B, pourvu sur au moins une face d'un revêtement adhésif, présentant un support en feuille,
les rubans adhésifs A et B étant disposés l'un au-dessus de l'autre, et
le ruban adhésif A étant appliqué sur la face interne du revêtement externe et le ruban adhésif B étant appliqué sur la face externe du revêtement interne de telle sorte que le ruban adhésif B est disposé sous le ruban adhésif A.

2. Utilisation d'un système de ruban adhésif selon la revendication 1 comme bandelette d'ouverture par déchirure sur un carton, **caractérisée en ce que**, dans la feuille du ruban adhésif A, la proportion de polymère non oléfinique polaire dans le mélange de la feuille du ruban adhésif se situe dans la plage allant de 5 à 50 % en poids, de préférence de 20 à 30 % en poids.

3. Utilisation d'un système de ruban adhésif selon la revendication 1 ou 2 comme bandelette d'ouverture par déchirure sur un carton, **caractérisée en ce que** le support en feuille du ruban adhésif A et le support en feuille du ruban adhésif B sont une feuille en polyoléfine étirée monoaxialement dans la direction longitudinale de la bandelette, et la feuille contient un mélange d'un polymère oléfinique et d'un polymère non oléfinique polaire, les deux supports en feuille étant de préférence identiques.

4. Utilisation d'un système de ruban adhésif selon au moins l'une quelconque des revendications 1 à 3 comme bandelette d'ouverture par déchirure sur un carton, **caractérisée en ce que** la feuille du ruban adhésif A
- présente une épaisseur de 15 à 200 µm, de préférence de 30 à 140 µm, de manière particulièrement préférée de 50 à 100 µm, et/ou
- présente dans la direction longitudinale un rapport d'étirage d'au moins 1:4,5, de préférence d'au moins 1:6.

5. Utilisation d'un système de ruban adhésif selon au moins l'une quelconque des revendications précédentes comme bandelette d'ouverture par déchirure sur un carton, **caractérisée en ce que**, dans la feuille du ruban adhésif A, le polymère oléfinique contient au moins 50 % en poids de propylène.

6. Utilisation d'un système de ruban adhésif selon au moins l'une quelconque des revendications précédentes comme bandelette d'ouverture par déchirure sur un carton, **caractérisée en ce que**, dans la feuille du ruban adhésif A, le polymère non oléfinique polaire est choisi dans le groupe constitué par les polyesters, les polyamides, le polyoxyméthylène, les polysulfures d'arylène, les polyoxydes d'arylène et les polyuréthanes, de préférence le polybutylène téréphtalate, le polymère non oléfinique étant de préférence partiellement cristallin.

7. Utilisation d'un système de ruban adhésif selon au moins l'une quelconque des revendications précédentes comme bandelette d'ouverture par déchirure sur un carton, **caractérisée en ce que** le support en feuille du ruban adhésif B présente une résistance à la traction, mesurée selon la méthode de mesure indiquée, de 200 N/mm² à 300 N/mm², de préférence de 220 N/mm² à 260 N/mm², de manière davantage préférée de 240 N/mm², et/ou une extensibilité, mesurée selon la méthode de mesure indiquée, inférieure à 35 %.

8. Utilisation d'un système de ruban adhésif selon au moins l'une quelconque des revendications précédentes comme bandelette d'ouverture par déchirure sur un carton, **caractérisée en ce que** le ruban adhésif A et le ruban adhésif B sont appliqués sous la forme d'une ligne fermée en soi sur le corps du carton ou sous la forme de plusieurs lignes fermées à des hauteurs différentes du corps.

9. Utilisation d'un système de ruban adhésif selon au moins l'une quelconque des revendications précédentes comme bandelette d'ouverture par déchirure sur un carton, **caractérisée en ce que** le ruban adhésif A et le ruban adhésif B sont appliqués à angle droit par rapport au papier ondulé du carton.

10. Utilisation d'un système de ruban adhésif selon au moins l'une quelconque des revendications précédentes comme bandelette d'ouverture par déchirure sur un carton, **caractérisée en ce qu'**une perforation est présente sur le carton, qui coupe complètement le ruban adhésif A et de préférence le carton se trouvant sous celui-ci et qui sert de prise pour la bandelette d'ouverture par déchirure lors de l'ouverture par déchirure du carton.

11. Utilisation d'un système de ruban adhésif selon au moins l'une quelconque des revendications précédentes comme bandelette d'ouverture par déchirure sur un carton, **caractérisée en ce que** la perforation est réalisée sous la forme de deux branches disposées en forme de V, qui ne se touchent pas au point de coupe potentiel.

12. Utilisation d'un système de ruban adhésif selon la revendication 11 comme bandelette d'ouverture par déchirure sur un carton, **caractérisée en ce qu'**une ligne de coupe relie les deux autres extrémités des branches de manière à obtenir la forme d'un triangle dont le sommet manque.

13. Utilisation du système de ruban adhésif selon au moins l'une quelconque des revendications précédentes comme bandelette d'ouverture par déchirure sur un carton, **caractérisée en ce que** la bandelette d'ouverture par déchirure obtenue à partir du ruban adhésif A et du ruban adhésif B présente une largeur inférieure à celle du ruban adhésif A.

14. Carton, qui est constitué par un revêtement externe et un revêtement interne, au moins un papier ondulé en carton-pâte étant disposé entre les revêtements, pourvu d'un système de ruban adhésif selon l'invention, le système de ruban adhésif étant constitué par un ruban adhésif A, pourvu sur au moins une face d'un revêtement adhésif, présentant un support en feuille, la feuille étant une feuille en polyoléfine étirée monoaxialement dans la direction longitudinale de la bandelette, et la feuille contenant un mélange d'un polymère oléfinique et d'un polymère non oléfinique polaire, et par un ruban adhésif B, pourvu sur au moins une face d'un revêtement adhésif, présentant un support en feuille,
les rubans adhésifs A et B étant disposés l'un au-dessus de l'autre, et
le ruban adhésif A étant appliqué sur la face interne du revêtement externe et le ruban adhésif B étant appliqué sur la face externe du revêtement interne de telle sorte que le ruban adhésif B est disposé sous le ruban adhésif A.
